# EUROPEAN PATENT SPECIFICATION

(11) **EP 4 477 694 B1**
(45) Date of publication and mention of the grant of the patent: **11.11.2026**
(21) Application number: 23179324.1
(22) Date of filing: 14.06.2023
(51) Int. Cl.: C08J 11/08, C08L 27/00

(54) **METHOD FOR TREATING HALOGENATED POLYMERS**
VERFAHREN ZUR BEHANDLUNG VON HALOGENIERTEN POLYMEREN
PROCÉDÉ DE TRAITEMENT DE POLYMÈRES HALOGÉNÉS

(43) Date of publication of application: 18.12.2024
(73) Proprietor: Baerlocher GmbH, 85716 Unterschleissheim (DE)
(72) Inventor: Fokken, Stefan, 85244 Röhrmoos (DE)
(74) Representative: Mathys & Squire

(56) References cited:
- EP-A1- 4 067 422
- US-A- 4 038 219

## Description

### Field of the invention

The present invention relates to a process for for treating halogenated polymers, in particular for the removal of heavy metals (e.g., Pb and Cd) from halogenated polymers (e.g., PVC), and more particularly to a process for the recycling of articles based on halogenated polymers.

### Background

The recycling of polymers, in particular halogenated polymers like vinyl chloride polymers, is part of a circular economy plan. It is desired to develop more ecologically responsible ways to produce, use and recycle halogenated polymers, in particular vinyl chloride polymers.

Most halogenated polymer articles which are desired to be recycled may have been stabilized with heavy metals and/or heavy metal compounds. In particular Pb- and Cd-containing stabilizers are comprised.

However, the future REACh regulations (Registration, Evaluation, Authorization and Restriction of Chemicals) are expected to only allow the recycling of Pb or Cd-containing polymer articles after authorization. Absent such authorization, mechanical recycling is not allowed.

In general, mechanical recycling is the more cost and energy efficient method of PVC recycling. Thus, to further allow recycling of halogenated polymer articles, the heavy metals need to be removed from the polymer.

Several methods of removing heavy metals from halogenated polymers are known in the art, all of which have drawbacks that are desired to be avoided.

For example, Solvay disclosed a plastic recycling process for PVC, the so-called "VinyLoop". It comprises the steps of dissolving plasticised PVC in an organic solvent and its precipitation by the introduction of steam. However, the introduction of steam results in an azeotropic mixture of water and the organic solvent that would require energy-demanding azeotropic separation before the solvent could be re-used. Moreover, the recovered PVC still comprises plasticizers which may also lead to regulatory issues, e.g., when DOP is comprised. Also, Solvay has not disclosed means for recycling rigid PVC articles.

Thus, there is a need for a process for treating halogenated polymers that is suitable for recycling rigid PVC articles. Further, there is a need for a process for recycling halogenated polymers that is allowable under REACh regulations. Further, there is a need for a process for treating halogenated polymers that allows for separation of inorganic compounds. Further, there is a need for a process for treating halogenated polymers that offers the possibility to re-use the solvent easily and energy-efficiently. Further, there is a need for a process for treating halogenated polymers that allows for direct processing of a recycled polymer into a new polymer article.

### Summary of the invention

The present invention relates to a process for treating halogenated polymers. The process comprises
(a) mixing a ground halogenated polymer starting material with a solvent to provide a composition comprising a first continuous phase and a first discontinuous phase,
   wherein the halogenated polymer starting material comprises
      a halogenated polymer, and
      one or more further components;
   wherein the first continuous phase comprises at least part of the halogenated polymer and at least part of the solvent, and wherein the first continuous phase is a solution; and
   wherein the first discontinuous phase comprises at least part of the one or more further components;
(b) separating the first continuous phase and the first discontinuous phase;
(c) adding a precipitant to the first continuous phase to provide a second continuous phase and a second discontinuous phase, wherein the second discontinuous phase comprises a halogenated polymer product,
   wherein the precipitant is selected from the group consisting of mono-alcohols with 1 to 5 carbon atoms, di-alcohols with 2 to 5 carbon atoms, and primary organic acids with 1 to 5 carbon atoms,
   wherein the precipitant added in step (c) is in the liquid form, and
   wherein the precipitant comprises no more than 2 wt.-% of water, based on the total weight of the precipitant; and
(d) separating the second discontinuous phase from the second continuous phase to provide the halogenated polymer product,
wherein the process is carried out in the absence of water, wherein the absence of water means that less than 3 wt.-% of water is comprised in a composition.

The present invention further relates to a process for making a polymer article. The process comprises
i. providing a halogenated polymer product obtained by a method according to the invention; and
ii. processing the halogenated polymer product to obtain a polymer article, wherein the halogenated polymer product is processed by
   a) mixing it with virgin halogenated polymer and one or more stabilizing components;
   b) adding stabilizing components; or
   c) adding the halogenated polymer product to a mixture of virgin halogenated polymer and optionally one or more stabilizing components during an extrusion process.

Thus, the present invention provides a method for treating halogenated polymer starting materials. The present invention is particularly useful for recycling halogenated polymer starting materials that includes the removal of compounds comprised in the starting material that are no longer desired in a new product. For example, the present invention is useful for the removal of heavy metals from the halogenated polymer starting materials, such that the heavy metal content in the halogenated polymer product is lower than the heavy metal content in the halogenated polymer starting material. The recovered halogenated polymer can be added either into a conventional dry-blending process, or directly into the extruder. A further advantage of the present invention is the absence of water or its presence in only a low amount, so that the solvent may be recovered easily to be re-used without extensive and energy-demanding work-up steps. A further advantage is the physical state of the precipitate which allows for an easy removal of the halogenated polymer from the vessel in which the precipitation step was performed and for easy further processing of the precipitate without a difficult removal step for a molten or otherwise syrupy polymer.

### Detailed description of the invention

The present invention relates to a process for treating halogenated polymers.

The term "solvent" includes a pure substance or a mixture of two or more substances.

The term "insoluble" as used herein means that no more than 1 g of a substance are dissolved in 1 L of the solvent under the mixing conditions. Thus, as used herein, an insoluble substance means the same as a substance which is insoluble in the solvent.

A "continuous phase" according to this disclosure is a solution. A "solution" according to this disclosure is a single phase, homogenous mixture of at least one solute in at least one solvent. Accordingly, the terms "dissolve" or "dissolving" mean that at least one solute and at least one solvent form a homogenous mixture.

A "discontinuous phase" according to this disclosure is a solid. The discontinuous phase may be dispersible but is not soluble in the continuous phase.

A "suspension" according to this disclosure is a continuous phase in which a discontinuous phase is dispersed.

The "absence of water" as used herein means that less than 3 wt.-% of water are comprised in a composition, preferably less than 2 wt.-% or less than 1 wt.-% or less than 0.5 wt.-%, more preferably less than 0.2 wt.-%.

A "rigid" polymer material according to this disclosure is an unplasticized polymer material in which no plasticizer has been added to soften it. Its rigidity may be characterized by a Young modulus between about 2.14 GPa and about 4.14 GPa. Rigid PVC (also called "PVC-U") is well known to those skilled in the technical field of polymers.

A "content" or a "percentage" specified herein and relating to an "amount" is by weight, unless otherwise specified.

Herein, the terms "halogenated polymer starting material", "polymer starting material" and "starting material" have the same meaning and are interchangeable.

The terms "elevated" and "reduced" temperature or pressure are in relation to normal conditions, i.e., 20°C and 1 bar.

The term "virgin" as used herein describes compounds that are used in the process according to the invention for the first time. For example, "virgin halogenated polymer" is a halogenated polymer that is merchant-bought or prepared outside the process according to the invention, namely it is not a halogenated polymer obtained after the precipitation step as the halogenated polymer product. Preferably the term "virgin" relates to a halogenated polymer that is freshly manufactured. i.e., a halogenated polymer that has just been obtained by polymerization of applicable monomers and processed into a marketable form as a raw material halogenated polymer. As another example, "virgin solvent" is a solvent that is store-bought or prepared outside the process, namely it is not a solvent obtained in a solvent-recovery step to be re-introduced into the process.

The term "sheet" as used herein means any thin, flexible or rigid, single-layer or multilayer article with a thickness of less than 50 mm.

The process for treating halogenated polymers comprises
(a) mixing a ground halogenated polymer starting material with a solvent to provide a composition comprising a first continuous phase and a first discontinuous phase,
   wherein the halogenated polymer starting material comprises
      a halogenated polymer, and
      one or more further components;
   wherein the first continuous phase comprises at least part of the halogenated polymer and at least part of the solvent, and wherein the first continuous phase is a solution; and
   wherein the first discontinuous phase comprises at least part of the one or more further components;
(b) separating the first continuous phase and the discontinuous phase;
(c) adding a precipitant to the first continuous phase to provide a second continuous phase and a second discontinuous phase, wherein the second discontinuous phase comprises a halogenated polymer product,
   wherein the precipitant is selected from the group consisting of mono-alcohols with 1 to 5 carbon atoms, di-alcohols with 2 to 5 carbon atoms, and primary organic acids with 1 to 5 carbon atoms, and
   wherein the precipitant added in step (c) is in the liquid form; and
(d) separating the second discontinuous phase from the second continuous phase to provide the halogenated polymer product.

### Step (a)

In a step (a), the process according to the invention includes mixing a ground halogenated polymer starting material with a solvent to provide a composition comprising a first continuous phase and a first discontinuous phase.

Preferred mixing techniques according to the invention are stirring, shaking, tumble mixing, batch mixing (e.g., using dynamic mixing inline or with the help of static mixers, moving mixers, gearboxes, multi-shaft mixers), continuous mixing (e.g., using a continuous processor where one or more dry substances and one or more solvents are accurately and consistently metered into the machine and a continuous, homogeneous mixture comes out of the machine), or combinations of two or more thereof. It is preferred to mix the ground halogenated polymer starting material with the solvent by stirring.

Mixing can be carried out under a pressure determined by the temperature. Generally, it is preferable to operate under elevated temperature and pressure, i.e., at a temperature and a pressure which are greater than the ambient values. The temperature can be up to 120°C, for example up to 100°C. For example, the associated pressure is at least 2 bar, or at least 4 bar. Advantageously, the pressure does not exceed 10 bar. Preferably, mixing is performed at a temperature of from 20 to 100°C. Preferably, the temperature is below the boiling point of the solvent or mixture of solvents. It is also preferred that the mixing is performed at an elevated temperature in the range of from 35 to 95°C or from 50 to 90°C or from 70 to 85°C.

The mixing can be carried out under an inert atmosphere, e.g., under nitrogen.

To provide a ground halogenated polymer starting material, the starting material is subject to grinding. Grinding can be performed by any suitable method for grinding polymers known in the art, e.g., using low-speed twin shaft grinders, high-speed knife-type grinders or low-speed grinders with a grid.

Preferably, the ground halogenated polymer starting material has a particle size in the range of from 0.3 mm to 5 cm, preferably of from 0.5 mm to 4 cm or from 0.8 mm to 3 cm or from 1 mm to 1 cm.

The halogenated polymer starting material comprises a halogenated polymer and one or more further components.

The halogenated polymer starting material comprises a halogenated polymer. The halogenated polymers can be polymers of vinyl chloride, including homopolymers (PVC), post-chlorinated polyvinyl chloride (CPVC), copolymers of vinyl chloride with ethylene-type unsaturated compounds, PVC-VA (vinyl acetate) copolymers, PVC-acrylate, polymer mixtures of polyvinyl chloride with ethyl-vinyl acetate (EVA), acrylonitrile/butadienestyrene (ABS), methacrylate-butadienestyrene (MBS), acrylonitrile butadiene (NBR), styrene-acrylonitrile (SAN), chlorinated polyethylene (CPE), polyalkylacrylate (PAA), polyalkylmethacrylate (PAMA), polyamides or polylactones. Preferably, the halogenated polymer is selected from the list consisting of homopolymers of vinyl chloride, post-chlorinated polyvinyl chloride, copolymers comprising vinyl chloride units, polymers of vinylidene chloride, and post-chlorinated polymers and copolymers of vinyl chloride, more preferably PVC and CPVC.

Preferably, the halogenated polymer starting material is rigid, that is the starting material comprises plasticizers and elastomers in an amount of from 0 to 5 phr, based on the amount of the halogenated polymer. More preferably, the halogenated polymer starting material is unplasticized, i.e., comprising no or less than 0.5 phr of plasticizer and elastomers.

The halogenated polymer starting material may be in any form, for example in the form of flexible pipes, or rigid pipes, containers, foamed and compact rigid sheets, window frames and the profiles they are based on and other technical profiles such as roller shutter profiles and the like. They may have been manufactured by any technique known in the art, e.g., by extrusion or injection moulding.

The halogenated polymer starting material comprises one or more further components. The further components can be one or more of additives for halogenated polymers that are known in the art, for example, heavy metals or heavy metal containing compounds, metal perchlorates, blowing agents, epoxy compounds, fatty acid salts, 1,3-dicarbonyl compounds, polyols, hydrotalcites, metal oxides, metal hydroxides, lubricants, antioxidants, pigments, fillers, UV absorbers, light stabilizers, impact modifiers, processing aids, antistatics, biocides, metal deactivators, optical brighteners, flame retardants, antifogging agents, and combinations of two or more thereof.

Advantageously, at least one further component comprises a heavy metal. Heavy metal components according to the invention are compounds comprising metals which are subject to regulations, in particular with regard to their discharge to environment. For example, the heavy metal is selected from the group comprising lead, cadmium, barium, tin, or a mixture of two or more thereof. Heavy metal-containing components may be soluble or insoluble in the solvent.

Preferred soluble heavy metal compounds are soluble organic heavy metal compounds, for example organic cadmium compounds selected from the group consisting of cadmium laurate and cadmium stearate, organic lead compounds selected from the group consisting of neutral lead stearate, dibasic lead stearate, organic barium compounds selected from the group consisting of barium stearate and barium laurate, and organic tin compounds selected from the group consisting of dimethyl tin dithioglycolate und dioctyl tin dithioglycolate.

Preferred insoluble heavy metal compounds are inorganic heavy metal compounds, for example tribasic lead sulfate, tetrabasic lead sulfate and dibasic lead phosphite, and insoluble organic heavy metal compounds, for example dibasic lead phthalate.

The halogenated polymer starting material may comprise 0.01 wt.-% to 5 wt.-% of heavy metals and heavy metal containing components, based on the total weight of the halogenated polymer.

The solvent according to the invention is a solvent which can dissolve at least 10 g of the halogenated polymer per liter of said solvent. Whether a solvent is capable of dissolving the halogenated polymer can be predicted by considering the solubility parameters of the solvent and the polymer, and the degree of hydrogen bonding (see "Properties of Polymers", D.W. Van Krevelen, 1990 edition, pp. 200-203). The solubility parameter of a component is defined as the square root of its cohesive energy density (see "Polymer Handbook", J. Brandrup and E.H. Immergut, Editors, Second Edition, p. IV- 337). The solvent capable of dissolving the halogenated polymer is generally chosen from those having a solubility parameter close to that of PVC. The term "close" is equivalent to "not differing by more than 6 units, preferably by not more than 4 units or by not more than 2 units or by not more than 1 unit". Tables of the solubility parameters of polymers and solvents are disclosed for example in "Properties of Polymers", D.W. Van Krevelen, 1990 edition, pp. 200-203 and "Polymer Handbook", J. Brandrup and E.H. Immergut, Editors, Second Edition, p. IV- 341 to IV-359. The solvent capable of dissolving the halogenated polymer is further generally chosen from those having a degree of hydrogen bonding which is similar. Thus, for choosing a suitable solvent, they are divided into three classes, namely poorly, moderately and strongly hydrogen bonded. For halogenated polymers according to the present invention, suitable solvents are preferably selected from the lists of solvents having a poor or moderate hydrogen bonding tendency (see "Properties of Polymers", D.W. Van Krevelen, 1990 edition, pp. 203).

Preferably, the solvent is selected from the group consisting of dioxane, acetone, ethyl acetate, halogenated organic solvents, methylethylketone, methylpropylketone, methylisopropylketone methylbutylketone, methylisobutylketone, tetrahydrofurane, cyclohexanone and a combination of two or more thereof.

The mixing ratio according to step (a) may be in the range of from 10 to 300 g of the ground halogenated polymer starting material per 1 L solvent, preferably from 50 to 200 g of the ground halogenated polymer starting material per 1 L solvent.

The composition obtained by mixing the halogenated polymer starting material and the solvent according to step (a) may comprise an amount of from 10 to 300 g of the halogenated polymer per 1 L solvent, preferably from 50 to 200 g of the halogenated polymer per 1 L solvent.

The composition obtained by mixing the ground halogenated polymer starting material and the solvent comprises a first continuous phase and a first discontinuous phase.

The first continuous phase comprises at least part of the halogenated polymer and at least part of the solvent.

The first continuous phase is a solution.

The solvent in the first continuous phase comprises less than 8 wt.-% of water, based on the total weight of the first continuous phase.

At least 90 wt.-% of the halogenated polymer are comprised in the first continuous phase, based on the total amount of halogenated polymer in the halogenated polymer starting material, preferably at least 99 wt.-%, more preferably at least 99.9 wt.-%.

The first continuous phase may further comprise at least one component selected from the group consisting of organic additives, and organic heavy metal compounds which are soluble in the solvent. Preferably, organic heavy metal compounds which are soluble in the solvent are organic cadmium compounds, organic barium compounds, organic tin compounds, and organic lead compounds.

For example, the organic heavy metal compounds which are soluble in the solvent may be of the formula

M1Rₘ.

Therein, M1 is a heavy metal, preferably selected from the group consisting of Pb, Cd, and Ba. R is a conjugate base of an organic acid having from six to twenty-four carbon atoms. For example, R is selected from the group consisting of a linear or branched organic acid, a saturated or unsaturated organic acid, a substituted or unsubstituted organic acid, an aliphatic organic acid, an aromatic organic acid, an alicyclic organic acid, an oxygen-containing heterocyclic organic acid, dicarboxylic acid, polyprotic carboxylic acids, and combinations thereof, all having from six to twenty-four carbon atoms. The parameter m is 1 or 2. Preferably, R is laurate or stearate.

For example, the organic heavy metal compounds which are soluble in the solvent may be heavy metal thioglycolates of the formula

R³ₐM1R¹_{b}.

Therein, M1 is a heavy metal, preferably Sn. R¹ is of formula -S-CH₂-C(O)O-R², where R² is H or a linear or branched alkyl group with having from six to twenty-four carbon atoms. R³ is a linear alkyl group having from 1 to 8 carbon atoms. The parameter a is 1 or 2. The parameter b is 2 or 3. Preferably, the heavy metal thioglycolates are dialkyl tin dithioglycolates.

Preferably, organic heavy metal compounds which are soluble in the solvent are organic cadmium compounds selected from the group consisting of cadmium laurate and cadmium stearate, organic lead compounds selected from the group consisting of neutral lead stearate, dibasic lead stearate, organic barium compounds selected from the group consisting of barium stearate and barium laurate, and organic tin compounds selected from the group consisting of dimethyl tin dithioglycolate und dioctyl tin dithioglycolate.

The first discontinuous phase comprises at least part of the one or more further components. The first discontinuous phase may be dispersible but is insoluble in the first continuous phase. The first discontinuous phase may comprise at least one of inorganic materials, and heavy metal compounds which are insoluble in the solvent.

For example, the first discontinuous phase may comprise an insoluble heavy metal compound, e.g., tribasic lead sulfate, tetrabasic lead sulfate, dibasic lead phosphite, dibasic lead phthalate or insoluble heavy metal salts derived from organic soluble heavy metal stabilizers such as the ones mentioned above and combinations of two or more thereof.

The first discontinuous phase may comprise insoluble inorganic materials. Insoluble inorganic materials may be selected from inorganic antacids, inorganic pigments, inorganic fillers, and combinations of two or more thereof.

Inorganic materials are for example metal perchlorates, metal oxides, metal hydroxides, metal carbonates, metal chlorides, metal bicarbonates, metal phosphates, metal phosphites, metal sulfates, metal sulfides, metal sulfide, metal thiosulfate, metal perchlorate, metal peroxosulfate, metal hydrogen phosphate, metal hydrogen phosphite, metal halogenide, metal nitrate, metal nitrite, metal hydrogen sulfate, metal hydrogen carbonate, metal hydrogen sulfite, metal hydrogen sulfide, metal dihydrogen phosphate, metal dihydrogen phosphite, and natural or synthetic inorganic materials (such as hydrotalcites, hydrocalumites, pyrocatecholates, zeolites or silicates).

Inorganic pigments are for example titanium dioxide, carbon black, Fe₂O₃, Sb₂O₃, spinels like cobalt blue and cobalt green, Cd(S,Se) and ultramarine blue.

Inorganic fillers are for example chalk, dolomite, limestone, wollastonite, silicate, glass fibers, talc, clays, carbon black and graphite.

### Step (b)

In a step (b), the first continuous phase and the first discontinuous phase are separated.

The first continuous phase and the first discontinuous phase may be separated by any method known in the art which is suitable for separating a continuous and a discontinuous phase. For example, the first continuous phase and the first discontinuous phase can be separated by filtration, centrifugation, sedimentation, decantation or combinations of two or more thereof. Preferably, the composition is centrifuged, followed by decanting the first continuous phase. The separation step can be performed in a continuous manner or batchwise.

### Step (c)

In a step (c), a precipitant is added to the first continuous phase to provide a second continuous phase and a second discontinuous phase.

The precipitant is selected from the group consisting of mono-alcohols with 1 to 5 carbon atoms, di-alcohols with 2 to 5 carbon atoms, and primary organic acids with 1 to 5 carbon atoms.

It may be beneficial that the specific evaporation enthalpy of the precipitant is lower than the evaporation enthalpy of water (2453 kJ/kg). For example, the specific evaporation enthalpy of the precipitant is less than 2400 kJ/kg, preferably less than 2000 kJ/kg, more preferably less than 1500 kJ/kg, and even more preferably less than 1200 kJ/kg. The specific evaporation enthalpy is a material constant. Specific evaporation enthalpies are accessible by well-known handbooks such as "CRC handbook of chemistry and physics", "Tabellenbuch der Chemietechnik" or "Landolt Börnstein: Physikalisch-chemische Tabellen" (5th edition, supplement 3).

For example, suitable precipitants are methanol, ethanol, propanol, iso-propanol, 1-butanol, iso-butanol, tert-butanol, iso-pentanol, tert-pentanol, ethylene glycol, and glacial acetic acid.

Preferably, the precipitant added in step (c) is selected from the group consisting of methanol, ethanol and glacial acetic acid.

The precipitant added in step (c) is in the liquid form. According to the present invention, "liquid form" means that a compound is provided at a pressure which is above its vapor pressure at a given temperature.

The precipitant added in step (c) comprises no more than 2 wt.-% of water, based on the total weight of the precipitant. For example, the precipitant added in step (c) comprises no more than 1.5 wt.-% of water, or no more than 1 wt.-% of water, or no more than 0.5 wt.-% of water, based on the total weight of the precipitant. More preferably, the precipitant added in step (c) comprises no more than 1 wt.-% of water, based on the total weight of the precipitant.

### Step (d)

In a step (d), the second discontinuous phase is separated from the second continuous phase to provide the halogenated polymer product.

The second continuous phase and the second discontinuous phase may be separated by any method known in the art which is suitable for separating a continuous and a discontinuous phase. For example, the second continuous phase and the second discontinuous phase can be separated by filtration, centrifugation, sedimentation, decantation or combinations of two or more thereof. Preferably, the composition is centrifuged, followed by decanting the first continuous phase. The separation step can be performed in a continuous manner or batchwise.

Preferably, the second continuous phase and the second discontinuous phase are separated by filtration, centrifugation, sedimentation, decantation or combinations of two or more thereof.

### Optional steps

The process may comprise further optional steps. It is preferred that the optional steps are carried out to reduce the heavy metal content in the second discontinuous phase and thus in the halogenated polymer product.

For example, the heavy metal content of the second discontinuous phase is reduced by at least 60 wt.-%, based on the heavy metal content of the second discontinuous phase before the optional further steps, preferably by at least 70 wt.-%, more preferably by at least 80 wt.-% or at least 90 wt.-%. For example, the heavy metal content of second discontinuous phase is reduced to less than 0.1 wt.-% preferably less than 0.05 wt.-% or even less than 0.02 wt.-%, based on the total amount of the halogenated polymer in the second discontinuous phase.

For example, the process may further comprise
(e) purifying the second discontinuous phase.

Preferably, purifying the second discontinuous phase comprises at least one of washing the second discontinuous phase, evaporating solvent from the second discontinuous phase, or combinations or two or more thereof.

Purifying the second discontinuous phase may comprise washing the second discontinuous phase. Washing the second discontinuous phase can be carried out with a washing liquid. The washing liquid is in liquid form. It can for example be a solvent, a combination of two or more solvents or a solution comprising a solvent and a dissolved compound. The washing liquid preferably does not dissolve the halogenated polymer, but dissolves at least one of the one or more further components comprised in the starting material. Examples for the washing liquid are water, diluted acids, aqueous solutions of acidic salts. For example, suitable acids may have a pKs value of from 4.5 to -3.

Where an acidic washing liquid is used, it is preferred that the washed second discontinuous phase is neutralized with a neutralizing agent. For example, the neutralizing agent can be an inorganic base, e.g., having a pKb value in the range of from 5 to -1, preferably selected from the group consisting of metal hydroxides, metal carbonates, metal oxides and ammonia. Preferred metals are alkaline and earth alkaline metals, for example sodium, potassium, magnesium, and calcium. It is preferred to use magnesium or calcium hydroxide or magnesium or calcium oxide as a neutralizing agent to neutralize the washed second discontinuous phase. It is also possible in the context of this invention that the washed second discontinuous phase is not neutralized.

Washing the second discontinuous phase may comprise adding the washing liquid to the second discontinuous phase by at least one of mixing, stirring, suspending, and rinsing the second discontinuous phase with the washing liquid. Thereby, at least part of the one or more further components that may be comprised in the second discontinuous phase are dissolved.

Purifying the second discontinuous phase may comprise evaporating residual solvent from the second discontinuous phase. Evaporation of the residual solvent can be carried out under a pressure determined by the temperature. Generally, the solvent is evaporated at an elevated temperature and a reduced pressure.

For example, the residual solvent is evaporated at a temperature of from 1 to 50°C above the boiling point of the solvent at the applied pressure, preferably of from 5 to 20°C above the boiling point of the solvent at the applied pressure.

It may be preferred that the pressure is reduced during the evaporation process. For example, the pressure may be reduced during the evaporation process, so that the residual solvent percentage is less than 1 wt.-% preferably less than 0.5 wt.-% or even less than 0.1 wt.-% based on the total amount of the halogenated polymer in the second discontinuous phase.

It may be preferred that the temperature is increased during the evaporation process. For example, the temperature may be increased during the evaporation process, so that the residual solvent percentage is less than 1 wt.-% preferably less than 0.5 wt.-% or even less than 0.1 wt.-% based on the total amount of the halogenated polymer in the second discontinuous phase.

It may be preferred that the temperature is increased, and the pressure is reduced during the evaporation process. For example, the temperature may be increased, and the pressure may be reduced during the evaporation process, so that the residual solvent percentage is less than 1 wt.-% preferably less than 0.5 wt.-% or even less than 0.1 wt.-% based on the total amount of the halogenated polymer in the second discontinuous phase.

The process may further comprise separating the solvent and the precipitant of the second continuous phase and re-using the recovered solvent.

Preferably, the solvent and the precipitant are separated by distillation. Thereby, a recovered solvent is obtained.

The recovered solvent may be re-introduced into the mixing step (a) of the process after separation from the precipitant. It is possible according to the invention to use only the recovered solvent in step (a). It is also possible to use a mixture of the recovered solvent and virgin solvent in step (a).

It is preferred that the process according to the invention is carried out either in the absence of water, such that any water added in the process is removed prior to the step of separating the solvent and the precipitant of the second continuous phase, or such that any water used in the process is added to the second discontinuous phase after separating the second continuous phase from the second discontinuous phase. Thereby, the solvent may easily be recovered without extensive work-up and purification steps.

For example, water may be used in a purifying step of the process. Preferably, water is only used in the purifying step of the process. Preferably, when water is added during the process, any water used in the process is added to the second discontinuous phase after separating the second continuous phase from the second discontinuous phase.

The process according to the invention may further comprise adding additives to the second discontinuous phase after separation from the second continuous phase, or after the optional purification step. Any additives commonly used when processing of halogenated polymers may be used.

According to the present invention, suitable additives are fatty acid salts. Preferred fatty acid salts are metal salts of saturated or unsaturated, linear or branched, aromatic, cycloaliphatic, or aliphatic carboxylic acids or hydroxycarboxylic acids preferably having from 2 to 22 carbon atoms.

Preferred metals are alkaline and earth alkaline metals, for example sodium, potassium, magnesium and calcium, more preferred are magnesium and calcium.

Examples of suitable carboxylic acid anions encompass anions of monovalent carboxylic acids, such as acetic acid, propionic acid, butteric acid, valeric acid, hexanoic acid, enanthic acid, octanoic acid, neodecanoic acid, 2-ethylhexanoic acid, pelargonic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl-4-hydroxybenzoic acid, toluic acid, dimethylbenzoic acid, ethylbenzoic acid, n-propylbenzoic acid, salicylic acid, p-tert-octylsalicylic acid, sorbic acid, anions of divalent carboxylic acids and of their monoesters, e.g. oxalic acid, malonic acid, maleic acid, tartaric acid, zimaric acid, mandelic acid, malic acid, glycolic acid, oxalic acid, salicylic acid, polyglycoldicarboxylic acids whose degree of polymerization is from about 10 to about 12, phthalic acid, isophthalic acid, terephthalic acid, or hydroxyphthalic acid, anions of tri- or tetravalent carboxylic acids and their mono-, di-, or triesters, e.g. hemimellitic acid, trimellitic acid, pyromellitic acid, or citric acid, and also "superbasic" carboxylates as described for example in DE 41 06 404 A or in DE 40 02 988 A.

Preferred are fatty acid salts whose anions are derived from saturated or unsaturated carboxylic acids or hydroxycarboxylic acids having from about 8 to about 20 carbon atoms, for example stearates, oleates, laurates, palmitates, behenates, neodecanoates, versatates, hydroxystearates, dihydroxystearates, p-tert-butylbenzoates, or (iso)octanoates, more preferably laurates and stearates.

It can be preferred that the fatty acid salt is selected from the group consisting of calcium stearate, calcium laurate, calcium 12-hydroxystearate, magnesium stearate, magnesium laurate, magnesium 12-hydroxystearate, zinc laurate, zinc stearate and zinc 12-hydroxystearate.

The amount of the metal soaps can be up to 20 wt.-%, for example from 0 wt.-% to 15 wt.-%, or from 0.1 to 10 wt.-%, or from 0.2 to 8 wt.-%, or from 0.5 to 6 wt.-%, or from 1 to 3 wt.-%, based on the total weight of the additives.

According to the present invention, suitable additives are hydrotalcites, zeolites, and hydrocalumites. Suitable hydrotalcites, zeolites, and hydrocalumites are described for example on pages 27 to 29 of EP 1 046 668 A, on pages 3, 5, and 7 of EP 256 872 A, on pages 2 and 3 of DE 41 06 411 C, or on pages 2 and 3 of DE 41 06 404 C. Preferably, hydrotalcite is added.

The amounts of the hydrotalcites, zeolites, and hydrocalumites can be up to 35 wt.-%, for example up to 25 wt.-%, based on the total weight of the additives.

According to the present invention, suitable additives are metal oxides and metal hydroxides. The metal cations of the metal oxides and metal hydroxides are, for example, divalent cations, preferably the cations of calcium, magnesium, zinc, or mixtures thereof, more preferably calcium.

The amount of the metal oxides, and metal hydroxides, or of mixtures of two or more thereof can be up to 20 wt.-%, for example from 0 wt.-% to 10 wt.-%, or from 0.1 to 8 wt.-%, or from 0.2 to 6 wt.-%, or from 0.5 to 5 wt.-%, or from 1 to 3 wt.-%, based on the total weight of the additives.

According to the present invention, suitable additives are polyols. Examples of suitable polyols are pentaerythritol, dipentaerythritol, tripentaerythritol, bistrime-thylolpropane, inositol, polyvinyl alcohol, bistrimethylolethane, trimethylolpropane, sorbitol, maltitol, isomaltitol, lactitol, lycasine, mannitol, lactose, leucrose, tris(hydroxyethyl) isocyanurate, palatinitol, tetramethylolcyclohexanol, tetramethylolcyclopentanol, tetramethylolcyclo-heptanol, glycerol, diglycerol, polyglycerol, thiodiglycerol, tris-2-hydroxyethyl isocyanurate (THEIC), trimethylol propane, polyol esters, glycols, and polyglycols. Preferred polyols are pentaerythritol, dipentaerythritol, and THEIC.

The amount of polyols can be up to 20 wt.-%, for example from 0 wt.-% to 10 wt.-%, or from 0.1 to 8 wt.-%, or from 0.2 to 6 wt.-%, or from 0.5 to 5 wt.-%, or from 1 to 3 wt.-%, based on the total weight of the additives.

According to the present invention, suitable additives are 1,3-dicarbonyl compounds, in particular β-diketones and β-ketoesters.

For the purposes of the present invention, suitable dicarbonyl compounds are those of the general formula R^{a}C(O)CHR^{b}-C(O)R^{c}, examples of these being those described on page 5 of EP 1 046 668 A. Examples of particularly suitable compounds are acetylacetone, butanoylacetone, heptanoylacetone, stearoylacetone, palmitoylacetone, lauroylacetone, 7-tert-nonylthioheptane-2,4-dione, benzoylacetone, dibenzoylmethane, lauroylbenzoylmethane, palmitoylbenzoylmethane, stearoylbenzoylmethane, isooctylbenzoylmethane, 5-hydroxycapronylbenzoylmethane, tribenzoylmethane, bis(4-methylbenzoyl)methane, benzoyl-p-chlorobenzoylmethane, bis(2-hydroxybenzoyl) methane, 4-methoxybenzoylbenzoylmethane bis(4-methoxybenzoyl)methane, benzoylformylmethane, benzoylacetylphenyl methane, 1-benzoyl-1-acetylmethane, stearoyl-4-methoxybenzoylm ethane, bis(4-tertbutylbenzoyl)methane, benzoylphenylacetylmethane, bis(cyclohexanoyl)methane, dipivaloylmethane, 2-acetylcyclopentanone, 2-benzoylcyclopentanone, the methyl, ethyl, butyl, 2-ethylhexyl, dodecyl, or octadecyl esters of diacetoacetic acid, and also propionyl- or butyrylacetic acids having from 1 to 18 carbon atoms, and also the ethyl, propyl, butyl, hexyl, or octyl ester of stearoylacetic acid, or polynuclear ß-ketoesters as described in EP 433 230 A, or dehydroacetic acid, and also its zinc, magnesium or alkali metal salts, or the alkali metal, alkaline earth metal or zinc chelates of these compounds.

Preferred 1,3-dicarbonyl compounds are dibenzoylmethane, lauroylbenzoylmethane, palmitoylbenzoylmethane, stearoylbenzoylmethane, isooctylbenzoylmethane, and stearoyl-4-methoxybenzoylmethane, more preferred stearoylbenzoylmethane.

The amount of 1,3-dicarbonyl compounds can be up to about 20 wt.-%, for example from 0 wt.-% to about 15 wt.-%, or from about 0.1 to about 10 wt.-%, or from about 0.2 to about 8 wt.-%, or from about 0.5 to about 5 wt.-%, or from about 1 to about 3 wt.-%, based on the total weight of the additives.

According to the present invention, suitable additives are lubricants, such as paraffin waxes, polyethylene waxes, polypropylene waxes, montan waxes, ester lubricants, for example, fatty acid esters, multifunctional fatty acid ester, purified or hydrogenated natural or synthetic triglycerides, or partial esters, amide waxes, chloroparaffins, glycerol esters, or alkaline earth metal soaps.

Examples of suitable lubricants are also described in "Kunststoffadditive" [Plastics additives] (R. Gächter and H. Müller, Carl Hanser Verlag, 3rd edition, 1989, pp. 478-488). For the purposes of the present invention, particularly suitable lubricants are those of the Baerolub^{®} product line from Baerlocher GmbH (Unterschleißheim, Germany).

The amount of lubricants can be up to 70 wt.-%, in particular up to 50 wt.-%, for example from 0 wt.-% to 30 wt.-%, or from 0.1 to 20 wt.-%, or from 0.2 to 15 wt.-%, or from 0.5 to 10 wt.-%, based on the total weight of the additives.

According to the present invention, suitable additives are phenolic antioxidants. Examples of phenolic antioxidants are alkylated phenols, alkylated thiomethyl phenols, alkylated hydrochinones, hydroxylated thiodiphenyl ethers, alkylidene bisphenols, benzyl compounds, hydroxybenzylated malonates, aromatic hydroxybenzylated compounds, triazine compounds, acyl aminophenols, ß-(3,5-di-tert-butyl-4-hydroxyphenyl)propionic acid esters, ß-(5-tert-butyl-4-hydroxy-3-methylphenyl)propionic acid esters, ß-(3,5-Dicyclohexyl-4-hydroxyphenyl)propionic acid esters, 3,5-di-tert-butyl-4-hydroxyphenyl acetic acid esters, and ß-(3,5-di-tert-butyl-4-hydroxyphenyl)propionic acid amides. For example, the phenolic additives are selected from alkylated monophenols, alkylated thiomethyl phenols, alkylated hydrochinones, hydroxylated thiodiphenyl ethers, alkylidene bisphenols, or ß-(3,5-di-tert-butyl-4-hydroxyphenyl)propionic acid esters.

Useful antioxidants are described on pages 33 to 35 of EP 1 046 668 A. For the purposes of the present invention, preferred antioxidants used are the products in the Irganox^{®} product line (producer: formerly Ciba Specialty Chemicals, now BASF), e.g. Irganox^{®} 1010 or 1076, or products from the Lowinox product line from Great Lakes.

It can be preferred that 3,5-di-tert-butyl-4-hydroxyphenylpropionic acid esters with octanol, octadecanol or pentaerythritol are added as antioxidant additives.

According to the present invention, suitable additives are organic plasticizers. Examples of suitable plasticizers are compounds from the group of the phthalic esters, such as dimethyl, diethyl, dibutyl, dihexyl, di-2-ethylhexyl, di-n-octyl, diisooctyl, diisononyl, diisodecyl, dicyclohexyl, dimethylcyclohexyl, dimethyl glycol, dibutyl glycol, benzyl butyl, or diphenyl phthalate, and also mixtures of phthalates, for example mixtures of alkyl phthalates having from 7 to 9 or from 9 to 11 carbon atoms in the ester alcohol, or a mixture of alkyl phthalates having from 6 to 10 or from 8 to 10 carbon atoms in the ester alcohol. Preferred plasticizers for the purposes of the present invention are dibutyl, dihexyl, di-2-ethylhexyl, di-n-octyl, diisooctyl, diisononyl, diisodecyl, diisotridecyl, and benzyl butyl phthalate, and mixtures of these alkyl phthalates.

Other suitable plasticizers are the esters of aliphatic dicarboxylic acids, in particular the esters of adipic, azelaic, cyclohexyl dicarboxylic acid or sebacic acid, or a mixture of two or more thereof. Examples of these plasticizers are di-2-ethylhexyl adipate, diisooctyl adipate, Hexamoll DINCH^{®}, diisononyl adipate, diisodecyl adipate, benzyl butyl adipate, benzyl octyl adipate, di-2-ethylhexyl azelate, di-2-ethylhexyl sebacate, and diisodecyl sebacate, preferably di-2-ethylhexyl acetate, Hexamoll DINCH^{®} and diisooctyl adipate.

Equally suitable plasticizers are trimellitic esters, such as tri-2-ethylhexyl trimellitate, triisotridecyl trimellitate, triisooctyl trimellitate, and also trimellitic esters having from 6 to 8 carbon atoms, from 6 to 10 carbon atoms, from 7 to 9 carbon atoms, or from 9 to 11 carbon atoms in the ester group, or mixtures of two or more thereof.

Examples of other suitable plasticizers are the polymeric plasticizers described in "Kunststoffadditive" [Plastics additives] (R. Gächter and H. Müller, Carl Hanser Verlag, 3rd edition, 1989, chapter 5.9.6, pages 412-415), or "PVC Technology" (W. V. Titow, 4th edition, Elsevier Publishers, 1984, pages 165-170). Examples of the starting materials most commonly used for the preparation of polyester plasticizers are dicarboxylic acids, such as adipic, phthalic, azeleic, or sebacic acid, and diols, such as 1,2-propanediol, 1,3-butanediol, 1,4-butanediol, 1,6-hexanediol, neopentyl glycol, or diethylene glycol, or mixtures of two or more thereof.

Equally suitable plasticizers are the phosphoric esters described in "Taschenbuch der Kunststoffadditive" [Plastics additives handbook] (chapter 5.9.5, pages 408-412). Examples of suitable phosphoric esters are tributyl phosphate, tri-2-ethylbutyl phosphate, tri-2-ethylhexyl phosphate, trichloroethyl phosphate, 2-ethylhexyl diphenyl phosphate, triphenyl phosphate, tricresyl phosphate, or trixylenyl phosphate, or mixtures of two or more thereof.

Other suitable plasticizers are chlorinated hydrocarbons (paraffins) or the hydrocarbons described in "Kunststoffadditive" [Plastics additives] (R. Gächter and H. Müller, Carl Hanser Verlag, 3rd edition, 1989, chapter 5.9.14.2, 25 pages 422-425 and chapter 5.9.14.1, page 422).

The amount of organic plasticizers is up to 70 wt.-%, in particular up to 50 wt.-%, for example from 0 wt.-% to 30 wt.-%, or from 0.1 to 15 wt.-%, or from 0.2 to 10 wt.-%, based on the total weight of the additives.

According to the present invention, suitable additives are epoxy compounds. For example, the epoxy compounds are epoxidized fatty acid esters. Preferably, the epoxidized fatty acid esters are composed of an epoxidized fatty acid and an alkyl residue.

Epoxidized fatty acids are obtainable via epoxidation of unsaturated fatty acids, preferably unsaturated fatty acids with 12 to 24 carbon atoms, for example myristoleic acid, palmitoleic acid, sapienic acid, oleic acid, elaidic acid, vaccenic acid, linoleic acid, linoelaidic acid, a-linolenic acid, gondoic acid, arachidonic acid, or eurucic acid. [0054] Preferred alkyl residues arelinear or branched alkyl residues with 1 to 12 carbon atoms, for example methyl, ethyl, n-propyl, i-propyl, n-butyl, i-butyl, t-butyl, n-hexyl or 2-ethylhexyl. A preferred epoxy compound is 2-ethylhexyl epoxystearate.

Further examples of epoxy compounds are epoxidized soya oil, epoxidized olive oil, epoxidized linseed oil, epoxidized castor oil, epoxidized peanut oil, epoxidized maize oil, epoxidized cottonseed oil, and glycidyl compounds.

Glycidyl compounds contain a glycidyl group directly bonded to a carbon atom, oxygen atom, nitrogen atom, or sulfur atom. Glycidyl esters or methylglycidyl esters are obtainable via reaction of a compound having at least one carboxy group in the molecule and epichlorohydrin or glycerol dichlorohydrin, or methylepichlorohydrin. The reaction advantageously takes place in the presence of bases.

Examples of compounds that can be used having at least one carboxy group in the molecule are aliphatic carboxylic acids. Examples of these acids are glutaric acid, adipic acid, pimelic acid, suberic acid, azelaic acid, sebacic 40 acid, or dimerized or trimerized linoleic acid, acrylic acid, methacrylic acid, caproic acid, caprylic acid, lauric acid, myristic acid, palmitic acid, stearic acid, or pelargonic acid. Cycloaliphatic carboxylic acids are equally suitable, for example cyclohexanecarboxylic acid, tetrahydrophthalic acid, 4-methyltetrahydrophthalic acid, hexahydrophthalic acid, endomethylenetetrahydrophthalic acid, or 4-methylhexahydrophthalic acid. Other suitable compounds are aromatic carboxylic acid, such as benzoic acid, phthalic acid, isophthalic acid, trimellitic acid, or pyromellitic acid.

The amount of epoxy compound can be up to 20 wt.-%, for example from 0 wt.-% to 10 wt.-%, or from 0.1 to 8 wt.-%, or from 0.2 to 6 wt.-%, or from 0.5 to 5 wt.-%, or from 1 to 3 wt.-%, based on the total weight of the additives.

Examples of suitable perchlorates are compounds of the formula M(ClO₄)ₖ. Therein, M is an organic or inorganic cation. The index k corresponds to the valency of M, and is an integer of 1, 2 or 3. Suitable inorganic cations are for example Li, Na, K, Mg, Ca, Sr, Zn, Al, La, Ce, or NH₄. Suitable organic cations are for example onium ions, namely ammonium cations, sulfonium cations and phosphonium cations. Preferably, the perchlorate is selected from the group consisting of LiClO₄, NaClO₄, KClO₄ und NH₄ClO₄, and combinations of two or more thereof.

The amount of perchlorates can be up to 5 wt.-%, for example from 0 wt.-% to 5 wt.-%, or from 0.001 to 3 wt.-%, or from 0.002 to 1 wt.-%, or from 0.005 to 0.5 wt.-%, or from 0.01 to 0.2 wt.-%, based on the total weight of the additives.

Examples of suitable blowing agents are organic azo and hydrazo compounds, tetrazoles, oxazines, isatoic anhydride, salts of citric acid, such as ammonium citrate, and also soda and sodium bicarbonate. Examples of particularly suitable compounds are ammonium citrate, azodicarbonamide, or sodium bicarbonate, or a mixture of two or more thereof.

Examples of suitable blowing agents are organic azo and hydrazo compounds, tetrazoles, oxazines, diphenoxy-4,4'-disulphohydrazide, isatoic anhydride, salts of citric acid, such as ammonium citrate, and also soda and sodium bicarbonate. Examples of particularly suitable compounds are diphenoxy-4,4'disulphonyl hydrazide, ammonium citrate, azodicarbonamide, or sodium bicarbonate, or a mixture of two or more thereof.

Pigments are also suitable as additives according to the present invention. Examples of suitable inorganic pigments are titanium dioxide, carbon black, Fe₂O₃, Sb₂O₃, (Ba,Sb)O₂, Cr₂O₃, spinells, such as cobalt blue and cobalt green, Cd(S,Se), or ultramarine blue. Examples of suitable organic pigments are azo pigments, phthalocyanine pigments, quinacridone pigments, perylene pigments, diketopyrrolopyrrol pigments, and anthraquinone pigments.

According to the present invention, fillers as described in "Handbook of PVC Formulating" (E.J. Wickson, John Wiley & Sons, Inc., 1993, pages 393-449), or reinforcing agents as described in "Taschenbuch der Kunststoffadditive" [Plastics additives handbook] (R. Gächter and H. Müller, Carl Hanser Verlag, 1990, pages 549-615) can be added.

Examples of particularly suitable fillers or reinforcing agents are calcium carbonate (chalk), dolomite, wollastonite, magnesium oxide, magnesium hydroxide, silicate, glass fibers, talc, kaolin, carbon black, or graphite, wood flour, or other renewable raw materials. It can be preferred that chalk is added as a filler.

According to the present invention, UV absorbers, light stabilizers, and combinations of two or more thereof can be added.

According to the present invention impact modifiers and processing aids, antistatics, biocides, metal deactivators, optical brighteners, flame retardants, and antifogging compounds can also be added. Suitable compounds are described for example in "Kunststoff Additive" [Plastics additives] (R. Keßler and H. Müller, Carl Henser Verlag, 3rd edition, 1989, and in "Handbook of PVC Formulating", E.J. Wilson, J. Wiley & Sons, 1993). Preferred processing aids are acrylate polymers, for example PMMA.

Preferably, the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, blowing agents, pigments, fillers, UV absorbers, light stabilizers, impact modifiers, processing aids, antistatics, biocides, metal deactivators, optical brighteners, flame retardants, antifogging agents, and combinations of two or more thereof

Preferably, the additives are added by stirring, shaking or a combination thereof. For example, the additives are added using broom-type mixers, plough-type mixers, or ribbon mixers.

The halogenated polymer product may comprise a residual solvent percentage of less than 1 wt.-% preferably less than 0.5 wt.-% or even less than 0.1 wt.-% based on the total amount of the halogenated polymer.

The halogenated polymer product preferably has a heavy metal content which is below the heavy metal content of the halogenated polymer starting material, more preferably a heavy metal content of less than 0.1 wt.-% preferably less than 0.05 wt.-% or even less than 0.01 wt.-%, based on the total amount of the halogenated polymer in the halogenated polymer product.

It is preferred that the process according to the invention is a process for for recycling halogenated polymers.

If the halogenated polymer starting material comprises heavy metals, heavy metal containing components, or both, the heavy metal content in the halogenated polymer starting material is higher than the heavy metal content in the recycled halogenated polymer product.

The halogenated polymer starting material may comprise 0.01 wt.-% to 5 wt.-% of heavy metals and heavy metal containing components, based on the total weight of the halogenated polymer of the halogenated polymer starting material.

The recycled halogenated polymer product preferably has a heavy metal which is below the heavy metal content of the halogenated polymer starting material, more preferably a heavy metal content of less than 0.1 wt.-% preferably less than 0.05 wt.-% or even less than 0.01 wt.-%, based on the total amount of the halogenated polymer in the recycled halogenated polymer product.

The method for recycling halogenated polymer starting materials that includes the removal of heavy metals from the halogenated polymer starting materials, such that the heavy metal content in the halogenated polymer product is lower than the heavy metal content in the halogenated polymer starting material. The recovered halogenated polymer can be added either into a conventional dry-blending process, or directly at the extruder.

The invention further relates to a process for making a polymer article. The process comprises
i. providing a halogenated polymer product obtained by a method according to the invention; and
ii. processing the halogenated polymer product to obtain a polymer article, wherein the halogenated polymer product is processed by
   a) mixing it with virgin halogenated polymer and one or more stabilizing components;
   b) adding stabilizing components; or
   c) adding the halogenated polymer product to a mixture of virgin halogenated polymer and optionally one or more stabilizing components during an extrusion process.

The halogenated polymer product can be processed in order to obtain a polymer article. The halogenated polymer product can be processed by any methods known in the art for processing halogenated polymers, for example by calendaring, extruding, injection molding, sintering, extrusion blow molding, or the plastisol process in order to obtain a polymer article.

For processing, the halogenated polymer product comprises one or more additives. Any additives commonly used when processing of halogenated polymers may be used. Preferably, the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, pigments, fillers, UV absorbers, light stabilizers, impact modifiers, processing aids, antistatics, biocides, metal deactivators, optical brighteners, flame retardants, antifogging agents, blowing agents, gelling agents and combinations of two or more thereof. Regarding preferences and examples of additives, reference is made to the above description.

Additives may be added during the process for treating halogenated polymers as described above. It is also possible to add additives to the halogenated polymer product. It is also possible to add additives during the process for treating halogenated polymers as described above, and to add further additives to the halogenated polymer product.

Thus, the process may comprise at least one of adding additives during the process for treating halogenated polymers as described above and adding additives before processing the halogenated polymer product. It may be preferred that the process comprises adding additives during the process for treating halogenated polymers as described above. It may also be preferred that the process comprises adding additives to the halogenated polymer product. Preferably, the process comprises adding additives during the process for treating halogenated polymers as described above and adding additives before processing the halogenated polymer product.

Preferably, the additives that are added to the halogenated polymer product are added by compounding.

For processing the halogenated polymer product, it may be mixed with virgin halogenated polymer and, optionally, one or more additives, preferably stabilizing components. The mixing of the halogenated polymer product with virgin halogenated polymer and, optionally, one or more additives is preferably carried out as described above in relation to step (a). All examples and preferences described for the mixing according to step (a) are also suitable for the mixing of the halogenated polymer product with virgin halogenated polymer and, optionally, one or more additives. For example, the halogenated polymer product may be mixed with virgin halogenated polymer and one or more stabilizing components.

For processing the halogenated polymer product, stabilizing components may be added. For the addition of stabilizing components, the same preferences and examples are valid as for the addition of additives ad described above.

For processing the halogenated polymer product, it may be added to a mixture of virgin halogenated polymer and, optionally, one or more additives, preferably one or more stabilizing components, during an extrusion process. For example, the halogenated polymer product may be added to an extruded mixture of virgin halogenated polymer and one or more stabilizing components during the extrusion process. Adding the halogenated polymer product during the extrusion process means for example that the halogenated polymer product is added directly into the extruder while the extruder is loaded with the virgin halogenated polymer and, optionally, one or more additives, and running, e.g., by pouring or feeding halogenated polymer product into the extruder.

Stabilizing components are for example fatty acid salts, hydrotalcites, metal oxides, metal hydroxides, polyols, 1,3-dicarbonyl compounds, antioxidants, epoxy compounds, metal perchlorates UV absorbers, light stabilizers, processing aids, and combinations of two or more thereof.

The virgin halogenated polymer can be a polymer of vinyl chloride, including homopolymers (PVC), post-chlorinated polyvinyl chloride (C-PVC), copolymers of vinyl chloride with ethylene-type unsaturated compounds, PVC-VA (vinyl acetate) copolymers, PVC-acrylate, polymer mixtures of polyvinyl chloride with ethyl-vinyl acetate (EVA), acrylonitrile/butadiene-styrene (ABS), methacrylate-butadienestyrene (MBS), acrylonitrile butadiene (NBR), styrene-acrylonitrile (SAN), chlorinated polyethylene (CPE), polyalkylacrylate (PAA), polyalkylmethacrylate (PAMA), polyamides or polylactones. Preferably, the halogenated polymer is selected from the list consisting of homopolymers of vinyl chloride, post-chlorinated polyvinyl chloride, copolymers comprising vinyl chloride units, polymers of vinylidene chloride, and post-chlorinated polymers and copolymers of vinyl chloride, more preferably PVC and CPVC.

The virgin halogenated polymer can be a mixture of two or more of the above.

The halogenated polymer of the virgin halogenated polymer can be the same or different halogenated polymer as the halogenated polymer of the halogenated polymer product. Preferably, the halogenated polymer of the virgin halogenated polymer and the halogenated polymer of the halogenated polymer product are the same. More preferably, the halogenated polymer of the virgin halogenated polymer and the halogenated polymer of the halogenated polymer product are the same and selected from PVC and CPVC.

The invention further relates to a halogenated polymer product obtained by the process as described herein.

The halogenated polymer product has a heavy metal content of less than 0.1 wt.-% preferably less than 0.05 wt.-% or even less than 0.01 wt.-%, based on the total amount of the halogenated polymer in the halogenated polymer product.

The halogenated polymer product may comprise a residual solvent percentage of less than 1 wt.-% preferably less than 0.5 wt.-% or even less than 0.1 wt.-%, based on the total amount of the halogenated polymer in the halogenated polymer product.

Preferably, the halogenated polymer product is stabilized for further processing. For example, the halogenated polymer product comprises one or more additives. Any additives commonly used when processing of halogenated polymers may be used. Preferably, the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, pigments, fillers, UV absorbers, light stabilizers, impact modifiers, processing aids, antistatics, biocides, metal deactivators, optical brighteners, flame retardants, antifogging agents, blowing agents, gelling agents and combinations of two or more thereof. Regarding preferences and examples reference is made to the above description.

The invention further relates to a polymer article obtained by the process as described herein.

### Exemplary embodiments

The following embodiments further illustrate the invention and describe preferred combinations and sub-combinations of features of the invention. The following embodiments do not constitute claims, those can be found at the end of the document numbered with arabic numerals.
A. A process for treating halogenated polymers comprising
   (a) mixing a ground halogenated polymer starting material with a solvent to provide a composition comprising a first continuous phase and a first discontinuous phase,
      wherein the halogenated polymer starting material comprises
         a halogenated polymer, and
         one or more further components;
      wherein the first continuous phase comprises at least part of the halogenated polymer and at least part of the solvent, and wherein the first continuous phase is a solution; and
      wherein the first discontinuous phase comprises at least part of the one or more further components;
   (b) separating the first continuous phase and the first discontinuous phase;
   (c) adding a precipitant to the first continuous phase to provide a second continuous phase and a second discontinuous phase, wherein the second discontinuous phase comprises a halogenated polymer product,
      wherein the precipitant is selected from the group consisting of mono-alcohols with 1 to 5 carbon atoms, di-alcohols with 2 to 5 carbon atoms, and primary organic acids with 1 to 5 carbon atoms,
      wherein the precipitant added in step (c) is in the liquid form, and
      wherein the precipitant comprises no more than 2 wt.-% of water, based on the total weight of the precipitant; and
   (d) separating the second discontinuous phase from the second continuous phase to provide the halogenated polymer product,
   wherein the process is carried out in the absence of water, wherein the absence of water means that less than 3 wt.-% of water is comprised in a composition.
B. The process of embodiment A, wherein at least one further component comprises a heavy metal, preferably wherein the heavy metal is selected from the group comprising lead, cadmium, barium or tin or a mixture of two or more thereof.
C. The process of any one of the preceding embodiments, wherein the halogenated polymer is selected from the list consisting of polymers of vinyl chloride, copolymers comprising vinyl chloride units, polymers of vinylidene chloride, and post-chlorinated polymers and copolymers of vinyl chloride, preferably PVC and CPVC.
D. The process of any one of the preceding embodiments, wherein the halogenated polymer starting material comprises 0.01 wt.-% to 5 wt.-% of heavy metals and heavy metal containing components, based on the total weight of the halogenated polymer.
E. The process of any one of the preceding embodiments, wherein the ground halogenated polymer starting material has a particle size of from 0.5 mm to 5 cm.
F. The process of any one of the preceding embodiments, wherein the solvent is a solvent which can dissolve at least 10 g of the halogenated polymer per liter of solvent, preferably a solvent selected from the group consisting of dioxane, acetone, ethyl acetate, halogenated organic solvents, methylethylketone, methylpropylketone, methylisopropylketone methylbutylketone, methyl isobutyl ketone, tetrahydrofurane, cyclohexanone and a combination of two or more thereof.
G. The process of any one of the preceding embodiments, wherein the mixing ratio is in the range of from 10 to 300 g of the ground halogenated polymer starting material per 1 L solvent, preferably from 50 to 300 g of the ground halogenated polymer starting material per 1 L solvent.
H. The process of any one of the preceding embodiments, wherein at least 90 wt.-% of the halogenated polymer are comprised in the first continuous phase, based on the total amount of halogenated polymer in the halogenated polymer starting material, preferably at least 99 wt.-%, more preferably at least 99.9 wt.-%.
I. The process of any one of the preceding embodiments, wherein the first continuous phase and the first discontinuous phase are separated by filtration, centrifugation, sedimentation, decantation or combinations of two or more thereof.
J. The process of any one of the preceding embodiments, wherein first discontinuous phase comprises at least one of inorganic materials, and heavy metal compounds which are insoluble in the solvent, preferably tribasic lead sulfate, tetrabasic lead sulfate, dibasic lead phosphite, and dibasic lead phthalate.
K. The process of any one of the preceding embodiments, wherein the precipitant added in step (c) is selected from the group consisting of methanol, ethanol, ethylene glycol and glacial acetic acid.
L. The process of any one of the preceding embodiments, wherein the precipitant added in step (c) comprises no more than 1 wt.-% of water, based on the total weight of the precipitant.
M. The process of any one of the preceding embodiments, wherein the second continuous phase and the second discontinuous phase are separated by filtration, centrifugation, sedimentation, decantation or combinations of two or more thereof.
N. The process of any one of the preceding embodiments, further comprising (e) purifying the second discontinuous phase.
O. The process of embodiment N, wherein purifying the second discontinuous phase comprises at least one of washing the second discontinuous phase, and evaporating solvent from the second discontinuous phase, or combinations or two or more thereof.
P. The process of any one of embodiments N or O, wherein purifying the second discontinuous phase reduces the heavy metal content in the second discontinuous phase and thus in the halogenated polymer product.
Q. The process of embodiment P, wherein the heavy metal content of the second discontinuous phase is reduced by at least 60 wt.-%, based on the heavy metal content of the second discontinuous phase before the purifying step, preferably by at least 70 wt.-%, more preferably by at least 80 wt.-% or at least 90 wt.-%.
R. The process of any one of embodiments P or Q, wherein the heavy metal content of the second discontinuous phase is reduced to less than 0.1 wt.-% preferably less than 0.05 wt.-% or even less than 0.01 wt.-% based on the heavy metal content of the second discontinuous phase before the purifying step.
S. The process of any one of the preceding embodiments, further comprising adding additives to the second discontinuous phase after separation from the second continuous phase, or after purifying the second discontinuous phase.
T. The process of embodiments S, wherein the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, blowing agents, pigments, fillers, UV absorbers, light stabilizers, impact modifiers, processing aids, antistatics, biocides, metal deactivators, optical brighteners, flame retardants, antifogging agents, and combinations of two or more thereof.
U. The process of any one of the preceding embodiments, wherein the halogenated polymer product has a heavy metal content of less than 0.1 wt.-% preferably less than 0.05 wt.-% or even less than 0.01 wt.-%, based on the total amount of the halogenated polymer.
V. The process of any one of the preceding embodiments, further comprising separating the solvent and the precipitant of the second continuous phase, and re-using the recovered solvent.
W. The process of embodiment V, wherein the solvent and the precipitant are separated by distillation.
X. The process of any one of the preceding embodiments, wherein the specific evaporation enthalpy of the precipitant is less than 2000 kJ/kg, preferably less than 1500 kJ/kg, more preferably less than 1200 kJ/kg.
Y. A process for making a polymer article comprising
   i. providing a halogenated polymer product obtained by a process comprising
      (a) mixing a ground halogenated polymer starting material with a solvent to provide a composition comprising a first continuous phase and a first discontinuous phase,
         wherein the halogenated polymer starting material comprises a halogenated polymer, and
         one or more further components;
         wherein the first continuous phase comprises at least part of the halogenated polymer and at least part of the solvent, and wherein the first continuous phase is a solution; and
         wherein the first discontinuous phase comprises at least part of the one or more further components;
      (b) separating the first continuous phase and the first discontinuous phase;
      (c) adding a precipitant to the first continuous phase to provide a second continuous phase and a second discontinuous phase, wherein the second discontinuous phase comprises the halogenated polymer product,
         wherein the precipitant is selected from the group consisting of mono-alcohols with 1 to 5 carbon atoms, di-alcohols with 2 to 5 carbon atoms, and primary organic acids with 1 to 5 carbon atoms,
         wherein the precipitant added in step (c) is in the liquid form, and
         wherein the precipitant comprises no more than 2 wt.-% of water, based on the total weight of the precipitant; and
      (d) separating the second discontinuous phase from the second continuous phase to provide the halogenated polymer product,
      wherein the process of step (i) is carried out in the absence of water, wherein the absence of water means that less than 3 wt.-% of water is comprised in a composition; and
   ii. processing the halogenated polymer product to obtain a polymer article, wherein the halogenated polymer product is processed by
      a) mixing it with virgin halogenated polymer and one or more stabilizing components;
      b) adding stabilizing components; or
      c) adding the halogenated polymer product to a mixture of virgin halogenated polymer and optionally one or more stabilizing components during an extrusion process.

### Examples

### Methods

The metal contents can be determined by ICP-AOES.
- For the determination of the lead content, samples are decomposed under pressure using the microwave pressure decomposition device Speedwave Xpert (Berghof) following manufacturer's instructions. The sample in weight is approximately 0.1 g, the reagent is 10 mL of nitric acid (65 % in water). The resulting solution is diluted with bi-distilled water to give 100 mL total volume. To 10 mL of this solution, 100 µL of Yb standard solution (1000 mg/L) are added as internal standard.
- For determining the Ti content the decomposition is carried out as described for the determination of the lead content with an additional 3 mL of tetrafluoroboric acid (50 % aqueous).
- The determination of the metal content is carried out using an Optima 8300 DV (Perkin Elmer) according to manufacturer's instructions.

The thermal stability of polymers can be determined by means of a Congo red test (DIN VDE 0472 part 614 at 200°C) with polymer sheets.

### Example 1 - recycling of PVC

6 g of starting material A (SM-A) was dissolved in 250 mL of methyl ethyl ketone at 60°C. SM-A is a ground hard-PVC extrudate. The resulting composition was then filtered to separate non-dissolved components, e.g., inorganic fillers (chalk) and pigments (TiO₂). Dropwise, 30 mL glacial acetic acid was added to the resulting clear solution to obtain complete precipitation of the dissolved PVC from SM-A. The composition was then allowed to stand. The continuous phase was separated from the discontinuous phase by decantation. The discontinuous phase was filtrated using a nutsch-type filter and dried in a desiccator at reduced pressure to provide 5.5 g of recycled PVC (PM A).

### Example 2 - reduction of diverse metal contents of two starting materials

The metal contents of SM-A and the PM-A were determined by ICP-AOES as described above. For determining the Ti content the decomposition is carried out with additional 3 mL of tetrafluoroboric acid (50 % aqueous).

The metal reduction of the PM-A is shown as a percentage relative to the metal content of SM-A

**Table 1**

| **Sample** | **Ba content** | **Ca content** | **Cd content** | **Pb content** | **Ti content** |
|---|---|---|---|---|---|
| PM-A (Ex. 1) | 94 % | 97 % | 71 % | 93 % | 96 % |

### Example 3 - application test results of halogenated polymer product

A conventional dry-blend is prepared with PVC, chalk and Ca Zn stabiliser OnePack 4 according to the amounts (phr) given in table, PM-A is added according to table 2 to the finished dryblend.

**Table 2**

| | **1** | **2** | **3** |
|---|---|---|---|
| S-PVC, k value 68 | 100 | 80 | 50 |
| PM-A | - | 20 | 50 |
| Chalk | 10 | 10 | 10 |
| Ca Zn stabiliser OnePack 4** | 1,668 | 1,668 | 1,668 |
| | | | |
| Stabilizer content [%] | 100 | 100 | 100 |
| Recyclate content [%] | 0 | 20 | 50 |

| | | | |
|---|---|---|---|
| * Ca Zn stabiliser OnePack 4 (weight %): 40 % zinc stearate, 13 % calcium stearate, 36 % zeolite 4A, 7 % pentaerythritol, 4 % calcium acetylacetonate. | | | |

The compositions are processed on a two-roll mill at 190°C. Samples are taken every 3 min. Congo red test is performed on the first samples, i.e., after 3 min, showing comparable stability for compositions 1, 2 and 3 of table 2.

## Claims

1. A process for treating halogenated polymers comprising
(a) mixing a ground halogenated polymer starting material with a solvent to provide a composition comprising a first continuous phase and a first discontinuous phase,
wherein the halogenated polymer starting material comprises
a halogenated polymer, and
one or more further components;
wherein the first continuous phase comprises at least part of the halogenated polymer and at least part of the solvent, and wherein the first continuous phase is a solution; and
wherein the first discontinuous phase comprises at least part of the one or more further components;
(b) separating the first continuous phase and the first discontinuous phase;
(c) adding a precipitant to the first continuous phase to provide a second continuous phase and a second discontinuous phase, wherein the second discontinuous phase comprises a halogenated polymer product,
wherein the precipitant is selected from the group consisting of mono-alcohols with 1 to 5 carbon atoms, di-alcohols with 2 to 5 carbon atoms, and primary organic acids with 1 to 5 carbon atoms,
wherein the precipitant added in step (c) is in the liquid form, and
wherein the precipitant comprises no more than 2 wt.-% of water, based on the total weight of the precipitant; and
(d) separating the second discontinuous phase from the second continuous phase to provide the halogenated polymer product,
wherein the process is carried out in the absence of water, wherein the absence of water means that less than 3 wt.-% of water is comprised in a composition.

2. The process of claim 1, wherein at least one further component comprises a heavy metal, preferably wherein the heavy metal is selected from the group comprising lead, cadmium, barium or tin or a mixture of two or more thereof.

3. The process of any one of the preceding claims, wherein the halogenated polymer is selected from the list consisting of polymers of vinyl chloride, copolymers comprising vinyl chloride units, polymers of vinylidene chloride, and post-chlorinated polymers and copolymers of vinyl chloride, preferably PVC and CPVC.

4. The process of any one of the preceding claims, wherein the solvent is a solvent which can dissolve at least 10 g of the halogenated polymer per liter of solvent, preferably a solvent selected from the group consisting of dioxane, acetone, ethyl acetate, halogenated organic solvents, methyl ethyl ketone, methylpropylketone, methyl isopropyl ketone methyl butyl ketone, methylisobutylketone, tetrahydrofurane, cyclohexanone and a combination of two or more thereof.

5. The process of any one of the preceding claims, wherein the precipitant added in step (c) is selected from the group consisting of methanol, ethanol, ethylene glycol and glacial acetic acid.

6. The process of any one of the preceding claims, wherein the precipitant added in step (c) comprises no more than 1 wt.-% of water, based on the total weight of the precipitant.

7. The process of any one of the preceding claims, further comprising
(e) purifying the second discontinuous phase.

8. The process of claim 7, wherein purifying the second discontinuous phase comprises at least one of washing the second discontinuous phase, and evaporating solvent from the second discontinuous phase, or combinations or two or more thereof.

9. The process of any one of claims 7 or 8, wherein purifying the second discontinuous phase reduces the heavy metal content in the second discontinuous phase and thus in the halogenated polymer product.

10. The process of claim 9, wherein the heavy metal content of the second discontinuous phase is reduced by at least 60 wt.-%, based on the heavy metal content of the second discontinuous phase before the purifying step, preferably by at least 70 wt.-%, more preferably by at least 80 wt.-% or at least 90 wt.-%.

11. The process of any one of claims 9 or 10, wherein the heavy metal content of the second discontinuous phase is reduced to less than 0.1 wt.-% preferably less than 0.05 wt.-% or even less than 0.01 wt.-% based on the heavy metal content of the second discontinuous phase before the purifying step.

12. The process of any one of the preceding claims, further comprising adding additives to the second discontinuous phase after separation from the second continuous phase, or after purifying the second discontinuous phase.

13. The process of claim 12, wherein the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, blowing agents, pigments, fillers, UV absorbers, light stabilizers, impact modifiers, processing aids, antistatics, biocides, metal deactivators, optical brighteners, flame retardants, antifogging agents, and combinations of two or more thereof.

14. A process for making a polymer article comprising
i. providing a halogenated polymer product obtained by a process comprising
(a) mixing a ground halogenated polymer starting material with a solvent to provide a composition comprising a first continuous phase and a first discontinuous phase,
wherein the halogenated polymer starting material comprises a halogenated polymer, and
one or more further components;
wherein the first continuous phase comprises at least part of the halogenated polymer and at least part of the solvent, and wherein the first continuous phase is a solution; and
wherein the first discontinuous phase comprises at least part of the one or more further components;
(b) separating the first continuous phase and the first discontinuous phase;
(c) adding a precipitant to the first continuous phase to provide a second continuous phase and a second discontinuous phase, wherein the second discontinuous phase comprises the halogenated polymer product,
wherein the precipitant is selected from the group consisting of mono-alcohols with 1 to 5 carbon atoms, di-alcohols with 2 to 5 carbon atoms, and primary organic acids with 1 to 5 carbon atoms,
wherein the precipitant added in step (c) is in the liquid form, and
wherein the precipitant comprises no more than 2 wt.-% of water, based on the total weight of the precipitant; and
(d) separating the second discontinuous phase from the second continuous phase to provide the halogenated polymer product,
wherein the process of step (i) is carried out in the absence of water, wherein the absence of water means that less than 3 wt.-% of water is comprised in a composition; and
ii. processing the halogenated polymer product to obtain a polymer article, wherein the halogenated polymer product is processed by
a) mixing it with virgin halogenated polymer and one or more stabilizing components;
b) adding stabilizing components; or
c) adding the halogenated polymer product to a mixture of virgin halogenated polymer and optionally one or more stabilizing components during an extrusion process.

## Patentansprüche

1. Verfahren zur Behandlung halogenierter Polymere, umfassend
(a) Mischen eines zerkleinerten halogenierten Polymer-Ausgangsmaterials mit einem Lösungsmittel, um eine Zusammensetzung bereitzustellen, die eine erste kontinuierliche Phase und eine erste diskontinuierliche Phase umfasst,
wobei das halogenierte Polymer-Ausgangsmaterial ein halogeniertes Polymer und eine oder mehrere weitere Komponenten umfasst;
wobei die erste kontinuierliche Phase mindestens einen Teil des halogenierten Polymers und mindestens einen Teil des Lösungsmittels umfasst und wobei die erste kontinuierliche Phase eine Lösung ist; und
wobei die erste diskontinuierliche Phase mindestens einen Teil der einen oder mehreren weiteren Komponenten umfasst;
Trennen der ersten kontinuierlichen Phase und der ersten diskontinuierlichen Phase;
Zugeben eines Fällungsmittels zu der ersten kontinuierlichen Phase, um eine zweite kontinuierliche Phase und eine zweite diskontinuierliche Phase bereitzustellen, wobei die zweite diskontinuierliche Phase ein halogeniertes Polymerprodukt umfasst,
(b) wobei das Fällungsmittel ausgewählt ist aus der Gruppe bestehend aus einwertigen Alkoholen mit 1 bis 5 Kohlenstoffatomen, Diolen mit 2 bis 5 Kohlenstoffatomen und primären organischen Säuren mit 1 bis 5 Kohlenstoffatomen,
(c) wobei das in Schritt (c) zugegebene Fällungsmittel in flüssiger Form vorliegt, und
wobei das Fällungsmittel, bezogen auf das Gesamtgewicht des Fällungsmittels, nicht mehr als 2 Gew.-% Wasser umfasst; und
Trennen der zweiten diskontinuierlichen Phase von der zweiten kontinuierlichen Phase, um das halogenierte Polymerprodukt bereitzustellen,
wobei das Verfahren in Abwesenheit von Wasser durchgeführt wird, wobei die Abwesenheit von Wasser bedeutet, dass in einer Zusammensetzung weniger als 3 Gew.-% Wasser enthalten sind.
(d) 2. Verfahren nach Anspruch 1, wobei mindestens eine weitere Komponente ein Schwermetall umfasst, wobei vorzugsweise das Schwermetall aus der Gruppe ausgewählt ist, die Blei, Cadmium, Barium oder Zinn oder eine Mischung von zwei oder mehr davon umfasst.
3. Verfahren nach einem der vorhergehenden Ansprüche, wobei das halogenierte Polymer aus der Liste bestehend aus Polymeren von Vinylchlorid, Copolymeren, die Vinylchlorid-Einheiten umfassen, Polymeren von Vinylidenchlorid und nachchlorierten Polymeren und Copolymeren von Vinylchlorid ausgewählt ist, vorzugsweise PVC und CPVC.

2. 4. Verfahren nach einem der vorhergehenden Ansprüche, wobei das Lösungsmittel ein Lösungsmittel ist, das mindestens 10 g des halogenierten Polymers pro Liter Lösungsmittel lösen kann, vorzugsweise ein Lösungsmittel, ausgewählt aus der Gruppe bestehend aus Dioxan, Aceton, Ethylacetat, halogenierten organischen Lösungsmitteln, Methylethylketon, Methylpropylketon, Methylisopropylketon, Methylbutylketon, Methylisobutylketon, Tetrahydrofuran, Cyclohexanon und einer Kombination von zwei oder mehr davon.

3. 5. Verfahren nach einem der vorhergehenden Ansprüche, wobei das in Schritt (c) zugegebene Fällungsmittel ausgewählt ist aus der Gruppe bestehend aus Methanol, Ethanol, Ethylenglykol und Eisessig.

4. 6. Verfahren nach einem der vorhergehenden Ansprüche, wobei das in Schritt (c) zugegebene Fällungsmittel nicht mehr als 1 Gew.-% Wasser, bezogen auf das Gesamtgewicht des Fällungsmittels, umfasst.

5. 7. Verfahren nach einem der vorhergehenden Ansprüche, ferner umfassend

6. Reinigen der zweiten diskontinuierlichen Phase.

7. 8. Verfahren nach Anspruch 7, wobei das Reinigen der zweiten diskontinuierlichen Phase mindestens eines von Waschen der zweiten diskontinuierlichen Phase und Verdampfen von Lösungsmittel aus der zweiten diskontinuierlichen Phase oder Kombinationen von zwei oder mehr davon umfasst.
(e) 9. Verfahren nach einem der Ansprüche 7 oder 8, wobei das Reinigen der zweiten diskontinuierlichen Phase den Schwermetallgehalt in der zweiten diskontinuierlichen Phase und somit in dem halogenierten Polymerprodukt verringert.

8. 10. Verfahren nach Anspruch 9, wobei der Schwermetallgehalt der zweiten diskontinuierlichen Phase um mindestens 60 Gew.-%, bezogen auf den Schwermetallgehalt der zweiten diskontinuierlichen Phase vor dem Reinigungsschritt, verringert wird, vorzugsweise um mindestens 70 Gew.-%, bevorzugter um mindestens 80 Gew.-% oder mindestens 90 Gew.-%.

9. 11. Verfahren nach einem der Ansprüche 9 oder 10, wobei der Schwermetallgehalt der zweiten diskontinuierlichen Phase auf weniger als 0,1 Gew.-%, vorzugsweise weniger als 0,05 Gew.-% oder sogar weniger als 0,01 Gew.-%, bezogen auf den Schwermetallgehalt der zweiten diskontinuierlichen Phase vor dem Reinigungsschritt, verringert wird.

10. 12. Verfahren nach einem der vorhergehenden Ansprüche, ferner umfassend das Zugeben von Additiven zu der zweiten diskontinuierlichen Phase nach dem Trennen der zweiten diskontinuierlichen Phase von der zweiten kontinuierlichen Phase oder nach dem Reinigen der zweiten diskontinuierlichen Phase.

11. 13. Verfahren nach Anspruch 12, wobei die Additive ausgewählt sind aus der Gruppe bestehend aus Fettsäuresalzen, Hydrotalciten, Metalloxiden, Metallhydroxiden, Polyolen, 1,3-Dicarbonylverbindungen, Gleitmitteln, Antioxidantien, Weichmachern, Epoxidverbindungen, Metallperchloraten, Treibmitteln, Pigmenten, Füllstoffen, UV-Absorbern, Lichtstabilisatoren, Schlagzähigkeitsmodifikatoren, Verarbeitungshilfsmitteln, Antistatika, Bioziden, Metalldeaktivatoren, optischen Aufhellern, Flammschutzmitteln, Antibeschlagmitteln und Kombinationen von zwei oder mehr davon.

12. 14. Verfahren zur Herstellung eines Polymerartikels, umfassend

13. Bereitstellen eines halogenierten Polymerprodukts, das durch ein Verfahren erhalten wird, umfassend

14. Mischen eines zerkleinerten halogenierten Polymer-Ausgangsmaterials mit einem Lösungsmittel, um eine Zusammensetzung bereitzustellen, die eine erste kontinuierliche Phase und eine erste diskontinuierliche Phase umfasst,
i. wobei das halogenierte Polymer-Ausgangsmaterial
(a) ein halogeniertes Polymer und
eine oder mehrere weitere Komponenten umfasst;
wobei die erste kontinuierliche Phase mindestens einen Teil des halogenierten Polymers und mindestens einen Teil des Lösungsmittels umfasst, und wobei die erste kontinuierliche Phase eine Lösung ist; und
wobei die erste diskontinuierliche Phase mindestens einen Teil der einen oder mehreren weiteren Komponenten umfasst;
Trennen der ersten kontinuierlichen Phase und der ersten diskontinuierlichen Phase;
Zugeben eines Fällungsmittels zu der ersten kontinuierlichen Phase, um eine zweite kontinuierliche Phase und eine zweite diskontinuierliche Phase bereitzustellen, wobei die zweite diskontinuierliche Phase das halogenierte Polymerprodukt umfasst,
(b) wobei das Fällungsmittel ausgewählt ist aus der Gruppe bestehend aus einwertigen Alkoholen mit 1 bis 5 Kohlenstoffatomen, Diolen mit 2 bis 5 Kohlenstoffatomen und primären organischen Säuren mit 1 bis 5 Kohlenstoffatomen,
(c) wobei das in Schritt (c) zugegebene Fällungsmittel in flüssiger Form vorliegt, und
wobei das Fällungsmittel nicht mehr als 2 Gew.-% Wasser, bezogen auf das Gesamtgewicht des Fällungsmittels, umfasst; und
Trennen der zweiten diskontinuierlichen Phase von der zweiten kontinuierlichen Phase, um das halogenierte Polymerprodukt bereitzustellen,
wobei das Verfahren des Schritts (i) in Abwesenheit von Wasser durchgeführt wird, wobei die Abwesenheit von Wasser bedeutet, dass weniger als 3 Gew.-% Wasser in einer Zusammensetzung enthalten sind; und
(d) Verarbeiten des halogenierten Polymerprodukts, um einen Polymerartikel zu erhalten, wobei das halogenierte Polymerprodukt verarbeitet wird durch
Mischen desselben mit halogeniertem Polymer als Neuware und einer oder mehreren stabilisierenden Komponenten;
ii. Zugeben von stabilisierenden Komponenten; oder
a) Zugeben des halogenierten Polymerprodukts zu einer Mischung aus halogeniertem Polymer als Neuware und gegebenenfalls einer oder mehreren stabilisierenden Komponenten während eines Extrusionsverfahrens.
b) adding stabilizing components; or
c) adding the halogenated polymer product to a mixture of virgin halogenated polymer and optionally one or more stabilizing components during an extrusion process.

## Revendications

1. Procédé de traitement de polymères halogénés comprenant
le mélange d'une matière de départ à base de polymère halogéné broyée avec un solvant pour fournir une composition comprenant une première phase continue et une première phase discontinue,
dans lequel ladite matière de départ à base de polymère halogéné broyée comprend
un polymère halogéné, et
un ou plusieurs autres composants ;
dans lequel la première phase continue comprend au moins une partie du polymère halogéné et au moins une partie du solvant, et dans lequel la première phase continue est une solution ; et
dans lequel la première phase discontinue comprend au moins une partie desdits un ou plusieurs autres composants ;
la séparation de la première phase continue et de la première phase discontinue ;
l'ajout d'un précipitant à la première phase continue pour fournir une deuxième phase continue et une deuxième phase discontinue, dans lequel la deuxième phase discontinue comprend un produit polymère halogéné,
dans lequel le précipitant est choisi dans le groupe constitué par les monoalcools ayant de 1 à 5 atomes de carbone, les diols ayant de 2 à 5 atomes de carbone et les acides organiques primaires ayant de 1 à 5 atomes de carbone,
dans lequel le précipitant ajouté à l'étape (c) se présente sous forme liquide, et
dans lequel le précipitant ne comprend pas plus de 2 % en poids d'eau, sur la base du poids total du précipitant ; et
la séparation de la deuxième phase discontinue d'avec la deuxième phase continue pour fournir le produit polymère halogéné,
dans lequel le procédé est mis en œuvre en l'absence d'eau, l'absence d'eau signifiant qu'une composition comprend moins de 3 % en poids d'eau.

2. Procédé selon la revendication 1, dans lequel au moins un autre composant comprend un métal lourd, le métal lourd étant de préférence choisi dans le groupe comprenant le plomb, le cadmium, le baryum ou l'étain ou un mélange de deux ou plusieurs d'entre eux.

3. Procédé selon l'une quelconque des revendications précédentes, dans lequel le polymère halogéné est choisi dans la liste constituée par les polymères de chlorure de vinyle, les copolymères comprenant des motifs de chlorure de vinyle, les polymères de chlorure de vinylidène et les polymères et copolymères de chlorure de vinyle post-chlorés, de préférence le PVC et le CPVC.

4. Procédé selon l'une quelconque des revendications précédentes, dans lequel le solvant est un solvant capable de dissoudre au moins 10 g du polymère halogéné par litre de solvant, de préférence un solvant choisi dans le groupe constitué par le dioxane, l'acétone, l'acétate d'éthyle, les solvants organiques halogénés, la méthyléthylcétone, la méthylpropylcétone, la méthylisopropylcétone, la méthylbutylcétone, la méthylisobutylcétone, le tétrahydrofurane, la cyclohexanone et une combinaison de deux ou plusieurs d'entre eux.

5. Procédé selon l'une quelconque des revendications précédentes, dans lequel le précipitant ajouté à l'étape (c) est choisi dans le groupe constitué par le méthanol, l'éthanol, l'éthylène glycol et l'acide acétique glacial.

6. Procédé selon l'une quelconque des revendications précédentes, dans lequel le précipitant ajouté à l'étape (c) ne comprend pas plus de 1 % en poids d'eau, sur la base du poids total du précipitant.

7. Procédé selon l'une quelconque des revendications précédentes, comprenant en outre
la purification de la deuxième phase discontinue.

8. Procédé selon la revendication 7, dans lequel la purification de la deuxième phase discontinue comprend au moins un élément choisi parmi le lavage de la deuxième phase discontinue, l'évaporation du solvant à partir de la deuxième phase discontinue, et des combinaisons de deux ou plusieurs d'entre eux.

9. Procédé selon l'une quelconque des revendications 7 ou 8, dans lequel la purification de la deuxième phase discontinue réduit la teneur en métaux lourds dans la deuxième phase discontinue et ainsi dans le produit polymère halogéné.

10. Procédé selon la revendication 9, dans lequel la teneur en métaux lourds de la deuxième phase discontinue est réduite d'au moins 60 % en poids, sur la base de la teneur en métaux lourds de la deuxième phase discontinue avant l'étape de purification, de préférence d'au moins 70 % en poids, plus préférentiellement d'au moins 80 % en poids ou d'au moins 90 % en poids.

11. Procédé selon l'une quelconque des revendications 9 ou 10, dans lequel la teneur en métaux lourds de la deuxième phase discontinue est réduite à moins de 0,1 % en poids, de préférence à moins de 0,05 % en poids, voire à moins de 0,01 % en poids, sur la base de la teneur en métaux lourds de la deuxième phase discontinue avant l'étape de purification.

12. Procédé selon l'une quelconque des revendications précédentes, comprenant en outre l'ajout d'additifs à la deuxième phase discontinue après sa séparation d'avec la deuxième phase continue, ou après purification de la deuxième phase discontinue.

13. Procédé selon la revendication 12, dans lequel les additifs sont choisis dans le groupe constitué par les sels d'acides gras, les hydrotalcites, les oxydes métalliques, les hydroxydes métalliques, les polyols, les composés 1,3-dicarbonylés, les lubrifiants, les antioxydants, les plastifiants, les composés époxy, les perchlorates métalliques, les agents gonflants, les pigments, les charges, les absorbeurs d'UV, les stabilisants à la lumière, les modificateurs de résistance aux chocs, les auxiliaires de mise en œuvre, les agents antistatiques, les biocides, les désactivateurs de métaux, les azurants optiques, les retardateurs de flamme, les agents anti-buée, et les combinaisons de deux ou plusieurs d'entre eux.

14. Procédé de fabrication d'un article polymère comprenant
la fourniture d'un produit polymère halogéné obtenu par un procédé comprenant
le mélange d'une matière de départ à base de polymère halogéné broyée avec un solvant pour fournir une composition comprenant une première phase continue et une première phase discontinue,
dans lequel ladite matière de départ à base de polymère halogéné broyée comprend un polymère halogéné, et
un ou plusieurs autres composants ;
dans lequel la première phase continue comprend au moins une partie du polymère halogéné et au moins une partie du solvant, et dans lequel la première phase continue est une solution ; et
dans lequel la première phase discontinue comprend au moins une partie desdits un ou plusieurs autres composants ;
la séparation de la première phase continue et de la première phase discontinue ;
l'ajout d'un précipitant à la première phase continue pour fournir une deuxième phase continue et une deuxième phase discontinue, dans lequel la deuxième phase discontinue comprend le produit polymère halogéné,
dans lequel le précipitant est choisi dans le groupe constitué par les monoalcools ayant de 1 à 5 atomes de carbone, les diols ayant de 2 à 5 atomes de carbone et les acides organiques primaires ayant de 1 à 5 atomes de carbone,
dans lequel le précipitant ajouté à l'étape (c) se présente sous forme liquide, et
dans lequel le précipitant ne comprend pas plus de 2 % en poids d'eau, sur la base du poids total du précipitant ; et
la séparation de la deuxième phase discontinue d'avec la deuxième phase continue pour fournir le produit polymère halogéné,
dans lequel le procédé de l'étape (i) est mis en œuvre en l'absence d'eau, l'absence d'eau signifiant qu'une composition comprend moins de 3 % en poids d'eau ; et
la mise en œuvre du produit polymère halogéné pour obtenir un article polymère, dans lequel le produit polymère halogéné est mis en œuvre par
son mélange avec du polymère halogéné vierge et un ou plusieurs composants stabilisants ;
l'ajout de composants stabilisants ; ou
l'ajout du produit polymère halogéné à un mélange de polymère halogéné vierge et éventuellement d'un ou plusieurs composants stabilisants pendant un procédé d'extrusion.
